(19) Europäisches Patentamt
European Patent Office
Office européen des brevets

(11) EP 3 198 613 B1

(12) **FASCICULE DE BREVET EUROPEEN**

(45) Date de publication et mention de la délivrance du brevet:
**17.02.2021 Bulletin 2021/07**

(21) Numéro de dépôt: **15780921.1**

(22) Date de dépôt: **21.09.2015**

(51) Int Cl.:
***H01B 3/44*** (2006.01) ***C08K 5/541*** (2006.01)
***H01B 3/28*** (2006.01)

(86) Numéro de dépôt international:
**PCT/FR2015/052519**

(87) Numéro de publication internationale:
**WO 2016/046479 (31.03.2016 Gazette 2016/13)**

(54) **DISPOSITIF ÉLECTRIQUE COMPRENANT UNE COUCHE RÉTICULÉE**

ELEKTRISCHE VORRICHTUNG MIT VERBUNDENER SCHICHT

ELECTRICAL DEVICE COMPRISING A CROSS-LINKED LAYER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.09.2014 FR 1459121**

(43) Date de publication de la demande:
**02.08.2017 Bulletin 2017/31**

(73) Titulaire: **Nexans**
**92400 Courbevoie (FR)**

(72) Inventeurs:
- **LARCHE, Jean-François**
**F-69250 Fleurieu-sur-Saone (FR)**
- **COMBESSIS, Anthony**
**F-13006 Marseille (FR)**
- **KEROMNES, Laurent**
**F-69630 Chaponost (FR)**

(74) Mandataire: **Ipsilon**
**Le Centralis**
**63, avenue du Général Leclerc**
**92340 Bourg-la-Reine (FR)**

(56) Documents cités:
**WO-A1-2014/000820 WO-A2-2007/100794**
**WO-A2-2011/138413**

- **DATABASE WPI Week 200352 Thomson Scientific, London, GB; AN 2003-545602 XP002739630, & JP 2003 012820 A (ASAHI KASEI KOGYO KK) 15 janvier 2003 (2003-01-15)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 198 613 B1

## Description

La présente invention se rapporte à un dispositif électrique du type câble électrique ou accessoire pour câble électrique, comprenant au moins une couche réticulée.

Elle s'applique typiquement, mais non exclusivement, aux domaines des câbles d'énergie à basse tension (notamment inférieure à 6kV), à moyenne tension (notamment de 6 à 45-60 kV) ou à haute tension (notamment supérieur à 60 kV, et pouvant aller jusqu'à 800 kV), qu'ils soient à courant continu ou alternatif.

Les câbles d'énergie comprennent typiquement un conducteur électrique central et au moins une couche électriquement isolante réticulée par des techniques bien connues de l'homme du métier, notamment par voie peroxyde.

La voie peroxyde tend de plus en plus à être évitée par rapport aux produits de décomposition du peroxyde, présentant des inconvénients lors de la fabrication du câble, voire même une fois le câble en configuration opérationnelle. En effet, lors de la réticulation, les peroxydes se décomposent et forment des sous-produits de réticulation tels que notamment du méthane, de l'acétophénone, de l'alcool cumylique, de l'acétone, du tertiobutanol, de l'alpha-méthyle styrène et/ou de l'eau. La formation d'eau à partir d'alcool cumylique est relativement lente et peut se produire après plusieurs mois, voire quelques années une fois que le câble est en configuration opérationnelle. Le risque de claquage des couches réticulées est ainsi augmenté de façon significative. En outre, si le méthane formé au cours de l'étape de réticulation n'est pas évacué des couches réticulées, des risques liés à l'explosivité du méthane et sa capacité à s'enflammer ne doivent pas être ignorés. Ce gaz peut également occasionner des dégâts une fois le câble mis en service. Même si des solutions existent pour limiter la présence de méthane au sein du câble, telles que par exemple traiter le câble thermiquement afin d'accélérer la diffusion de méthane en dehors du câble, elles deviennent longues et coûteuses lorsque l'épaisseur des couches réticulées est importante.

Toutefois, il existe toujours une forte demande pour fournir de nouvelles compositions réticulées pour dispositif électrique, présentant des propriétés électriques et mécaniques ainsi qu'une mise en œuvre optimisées, notamment pour des applications dans le domaine des câbles électriques et accessoires pour câbles électriques.

Le but de la présente invention est de pallier les inconvénients des techniques de l'art antérieur en proposant un dispositif électrique comprenant une couche réticulée dont la fabrication est plus respectueuse de l'environnement et limite de façon significative la présence de sous-produits de réticulation, comme par exemple le méthane et/ou l'eau, tout en garantissant de bonnes propriétés électriques et mécaniques.

La présente invention a pour objet un dispositif électrique comprenant une couche réticulée obtenue à partir d'une composition polymère réticulable comprenant un matériau polymère et des particules à structure polyédrique, caractérisé en ce que les particules ont un point de fusion d'au plus 200°C.

Grâce à l'invention, la couche réticulée du dispositif électrique présente des propriétés électriques optimales, tout en garantissant un bon niveau de réticulation.

En outre, la couche réticulée de l'invention peut avantageusement permettre de limiter de façon significative la présence de sous-produits de réticulation, tout en garantissant de bonnes propriétés mécaniques au cours de la vie du câble. Plus particulièrement, l'invention permet de limiter significativement l'utilisation de peroxyde organique pour réticuler les matériaux polymères, notamment les polymères d'oléfine.

### Les particules à structure polyédrique

Dans la présente invention, la température de fusion des particules à structure polyédrique est classiquement mesurée au pic de fusion par analyse calorimétrique différentielle (DSC) avec une rampe de température de 10°C/min sous atmosphère d'azote.

La température de fusion des particules structure polyédrique peut être d'au plus de 180°C, de préférence d'au plus de 100°C, de préférence d'au plus 50°C, et de préférence d'au plus 30°C.

Les particules à structure polyédrique selon l'invention sont des particules ayant une forme géométrique à trois dimensions, plus particulièrement appelé structure « cage », ayant notamment des faces planes polygonales qui se rencontrent selon des segments de droite ou arêtes.

Plus particulièrement, les particules de l'invention comprennent des groupements Si-O, ou en d'autres termes des groupements comprenant des atomes de silicium et d'oxygène, l'atome de silicium étant lié de façon covalente à l'atome d'oxygène.

Dans un mode de réalisation préféré, les particules de l'invention peuvent être des POSS (Polyhedral oligomeric silsesquioxane).

Les POSS sont classiquement des cages inorganiques silicum-oxygène avec des structures du type $SiO_{3/2}$ et des substituants organiques R liés de façon covalente aux atomes de silicium de la cage.

La formule générale des POSS est du type $R_nT_n$, dans laquelle T = $SiO_{3/2}$, n étant un entier. De préférence, n est un entier pair pouvant être égal à 8, 6, 10, 12, 14 ou 16.

La structure suivante illustre la formule générale d'un POSS avec n = 8 :

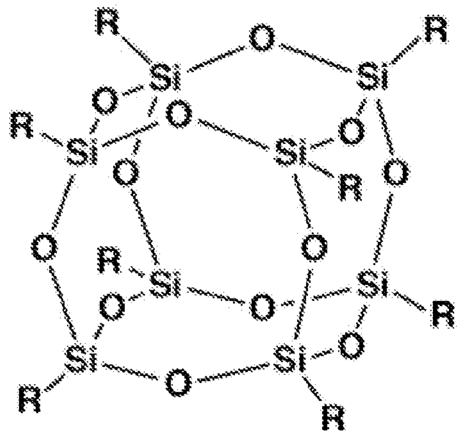

Dans les POSS selon l'invention, les groupements R, identiques ou différents, peuvent être choisis parmi des groupements méthyle, éthyle, propyle, butyle, isooctyle, phényle, cylcopentyle, cyclohexyle et cycloheptyle.

Un ou plusieurs groupements R peut être également substitué avec une fonction réactive choisie par exemple parmi une fonction vinyle ($CH=CH_2$), époxy (éther cyclique $-CH_2-O-CH_2-$), acide carboxylique, silane, acrylate, méthacrylate, alcool, amine, et imide. Lorsque la particule POSS comprend au moins une fonction vinyle, on peut parler de POSS vinylé.

A titre d'exemple, dans le cadre de l'invention, on peut citer les POSS suivants :

- Octa vinyl POSS, commercialisé par la société Hybrid Plastics sous la référence OL1170, ayant une température de fusion de 177°C :

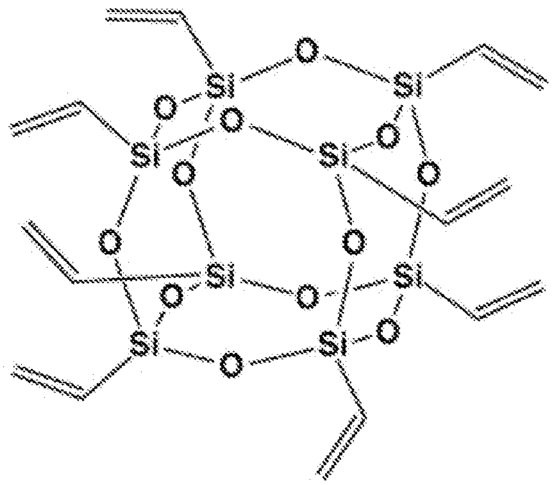

- N-phenyl aminopropyl POSS, commercialisé par la société Hybrid Plastics sous la référence AM0281, ce POSS étant liquide à 25°C (i.e. température de fusion inférieure à 25°C) :

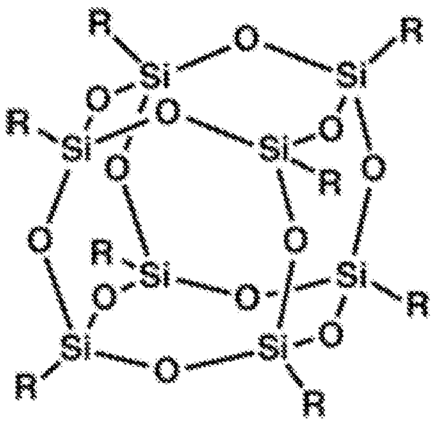
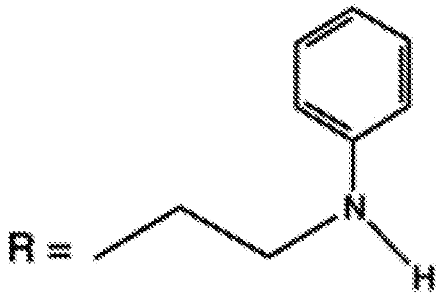

- Methacryl POSS, commercialisé par la société Hybrid Plastics sous la référence MA0735, ce POSS étant liquide à 25°C (i.e. température de fusion inférieure à 25°C) :

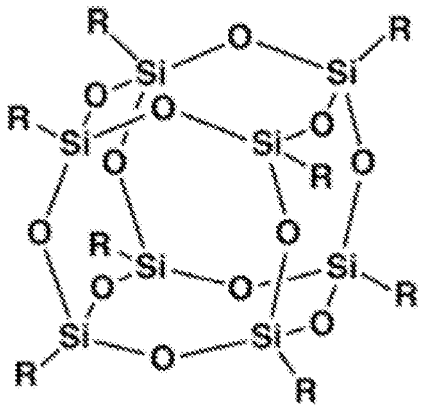
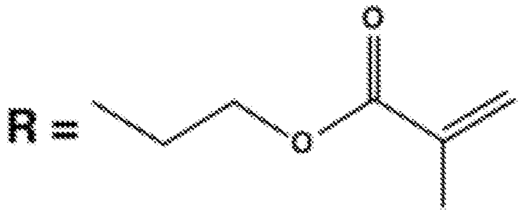

- Epoxycyclohexyl POSS, commercialisé par la société Hybrid Plastics sous la référence EP0408, ce POSS étant liquide à 25°C (i.e. température de fusion inférieure à 25°C) :

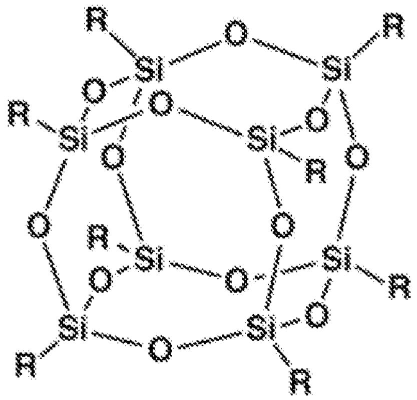
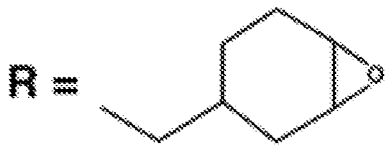

- Glycidyl POSS, commercialisé par la société Hybrid Plastics sous la référence EP0409, ce POSS étant liquide à 25°C (i.e. température de fusion inférieure à 25°C) :

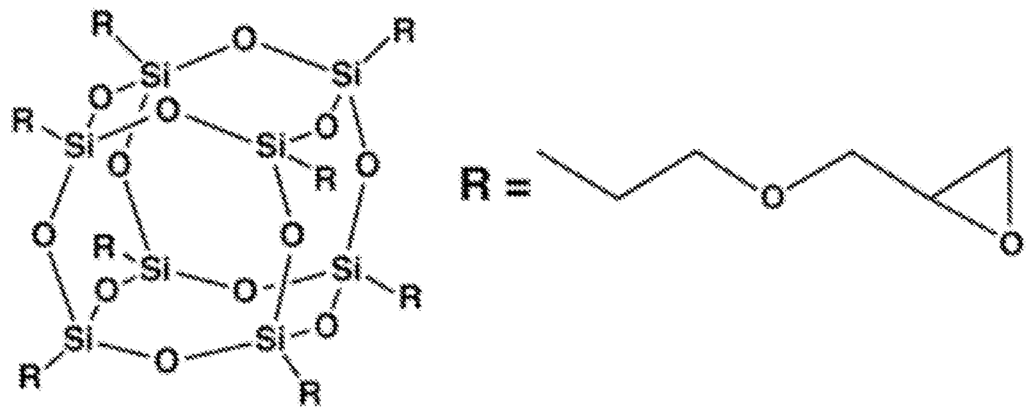

Les particules de l'invention sont préférentiellement des nanoparticules.

Les nanoparticules minérales ont typiquement au moins l'une de leurs dimensions de taille nanométrique ($10^{-9}$ mètre).

On entend par le terme « dimension », la dimension moyenne en nombre de l'ensemble des nanoparticules d'une population donnée, cette dimension étant classiquement déterminée par des méthodes bien connues de l'homme du métier.

La dimension des nanoparticules selon l'invention peut être par exemple déterminée par microscopie électronique, notamment par microscope électronique à balayage (MEB) ou microscopie électronique en transmission (MET).

La dimension moyenne en nombre des nanoparticules peut être notamment d'au plus 400 nm, de préférence d'au plus 300 nm, et plus préférentiellement d'au plus 100 nm.

De façon particulièrement préférée, la dimension moyenne en nombre des nanoparticules est d'au moins 1 nm et d'au plus 100 nm, de préférence d'au moins 1 nm et d'au plus 50 nm, et de façon particulièrement préférée d'au moins 1 et d'au plus 3 nm.

Dans un mode de réalisation particulier, la composition réticulable peut comprendre une quantité suffisante de particules à structure polyédrique pour pouvoir obtenir les propriétés désirées.

A titre d'exemple, la composition polymère réticulable peut comprendre au plus 20,0 % en poids de particules à structure polyédrique, et de préférence au plus 10,0 % en poids de particules à structure polyédrique, par rapport au poids total de la composition réticulable. La composition réticulable peut comprendre en outre au moins 0,1 % en poids de particules à structure polyédrique, par rapport au poids total de la composition polymère réticulable.

Le matériau polymère

Le matériau polymère de l'invention peut comprendre un ou plusieurs polymère(s), le terme « polymère » pouvant s'entendre par tout type de polymère bien connu de l'homme du métier tel que homopolymère ou copolymère (e.g. copolymère séquencé, copolymère statistique, terpolymère, ...etc).

Le polymère peut être du type thermoplastique ou élastomère, et peut être réticulé par des techniques étant bien connues de l'homme du métier.

Dans un mode de réalisation particulier, le matériau polymère, ou en d'autres termes la matrice polymère de la composition réticulable, peut comprendre un ou plusieurs polymères d'oléfine, et de préférence un ou plusieurs polymères d'éthylène et/ou un ou plusieurs polymères de propylène. Un polymère d'oléfine est classiquement un polymère obtenu à partir d'au moins un monomère d'oléfine.

Plus particulièrement, le matériau polymère comprend plus de 50% en poids de polymère(s) d'oléfine, de préférence plus de 70% en poids de polymère(s) d'oléfine, et de façon particulièrement préféré plus de 90% en poids de polymère(s) d'oléfine, par rapport au poids total de matériau polymère. De préférence, le matériau polymère est uniquement composé d'un ou de plusieurs polymère(s) d'oléfine.

A titre d'exemple, le matériau polymère de l'invention peut comprendre un ou plusieurs polymères d'oléfine choisis parmi un polyéthylène linéaire basse densité (LLDPE); un polyéthylène très basse densité (VLDPE); un polyéthylène basse densité (LDPE); un polyéthylène moyenne densité (MDPE); un polyéthylène haute densité (HDPE); un copolymère élastomère d'éthylène-propylène (EPR); un terpolymère éthylène propylène diène monomère (EPDM); un copolymère d'éthylène et de vinyl ester tel qu'un copolymère d'éthylène et d'acétate de vinyl (EVA); un copolymère d'éthylène et d'acrylate tel qu'un copolymère d'éthylène et d'acrylate de butyle (EBA) ou un copolymère d'éthylène et d'acrylate de méthyle (EMA); un copolymère d'éthylène et d'alpha-oléfine tel qu'un copolymère d'éthylène et d'octène (PEO) ou un copolymère d'éthylène et de butène (PEB); un polymère d'oléfine fonctionnalisé ; du polypropylène ; un copolymère du propylène ; et un de leurs mélanges.

Dans un mode de réalisation particulier, le matériau polymère est un matériau non polaire, ou en d'autres termes le matériau polymère comprend plus de 60% en poids de polymère(s) apolaire(s), et de préférence plus de 80% en poids de polymère(s) apolaire(s), et de préférence 100% en poids de polymère(s) apolaire(s), par rapport au poids total de matériau polymère dans la composition polymère réticulable. A titre d'exemple de polymère polaire, on peut citer des polymères ayant des fonctions acrylate, époxyde et/ou vinyle. Ce mode de réalisation particulier peut être préféré lorsque la couche réticulée de l'invention est utilisée en tant que couche électriquement isolante.

La composition polymère réticulable de l'invention peut comprendre au moins 30 % en poids de matériau polymère, de préférence au moins 50 % en poids de matériau polymère, de préférence au moins 80% en poids de matériau polymère, et de préférence au moins 90% en poids de matériau polymère, par rapport au poids total de la composition polymère réticulable.

La composition polymère réticulable

La composition polymère de l'invention est une composition réticulable. Elle peut être avantageusement exempte de composes halogénés.

La composition polymère réticulable est réticulée par des procédés de réticulation bien connus de l'homme du métier, tels que par exemple la réticulation peroxyde, la réticulation par faisceau d'électrons, la réticulation silane, la réticulation par rayonnement ultra-violets, ..etc.

La procédé préféré pour réticuler la composition polymère est la réticulation peroxyde. A ce titre, la composition polymère réticulable peut comprendre un agent de réticulation du type peroxyde organique.

La composition polymère peut comprendre une quantité suffisante d'un ou de plusieurs agents de réticulation, afin d'obtenir ladite couche réticulée.

A titre d'exemple, la composition polymère réticulable peut comprendre de 0,01 à 10,0 % en poids d'agent de réticulation, par rapport au poids total de la composition polymère réticulable.

De préférence, notamment lors de l'utilisation d'un agent de réticulation de type peroxyde organique, la composition polymère réticulable peut avantageusement comprendre au plus 5,0 % en poids d'agent de réticulation, de préférence au plus 2,0 % en poids d'agent de réticulation, de préférence au plus 1,0 % en poids d'agent de réticulation, et de préférence au plus 0,5 % en poids d'agent de réticulation, par rapport au poids total de la composition polymère réticulable.

Dans un mode de réalisation particulier, la composition polymère réticulable de l'invention ne comprend pas d'agent de réticulation du type de peroxyde organique.

Dans un autre mode de réalisation particulier, la composition polymère réticulable ne comprend pas d'agent dispersant amphiphile. Plus particulièrement, la composition polymère réticulable peut ne pas comprendre un agent dispersant amphiphile choisi parmi un acide carboxylique amphiphile, une amine amphiphile, une huile végétale ayant une structure triglycéride, une huile ayant un groupe ester, et un mélange de ces composés.

Les charges

La composition polymère réticulable de l'invention peut en outre comprendre une ou plusieurs charges.

La charge de l'invention peut être une charge minérale ou organique. Elle peut être choisie parmi une charge ignifugeante et une charge inerte (ou charge non combustible).

A titre d'exemple, la charge ignifugeante peut être une charge hydratée, choisie notamment parmi les hydroxydes métalliques tels que par exemple le dihydroxyde de magnésium (MDH) ou le trihydroxyde d'aluminium (ATH). Ces charges ignifugeantes agissent principalement par voie physique en se décomposant de manière endothermique (e.g. libération d'eau), ce qui a pour conséquence d'abaisser la température de la couche réticulée et de limiter la propagation des flammes le long du dispositif électrique. On parle notamment de propriétés de retard à la flamme, bien connues sous l'anglicisme « *flame retardant* ».

La charge inerte peut être, quant à elle, de la craie, du talc, de l'argile (e.g. le kaolin), du noir de carbone, ou des nanotubes de carbone.

La charge peut également être une charge électriquement conductrice choisie notamment parmi les charges carbonées. A titre d'exemple, on peut citer comme charge électriquement conductrice, des charges choisies parmi les noirs de carbone, les graphènes, les nanotubes de carbone, et un de leurs mélanges.

Selon une première variante, la charge électriquement conductrice pourra être préférée pour obtenir une couche réticulée dite « semi-conductrice », et pourra être introduite dans la composition polymère en une quantité suffisante pour rendre la composition conductrice par percolation, cette quantité variant notamment selon le type et la morphologie de charge électriquement conductrice sélectionnée. A titre d'exemple, la quantité appropriée de charge électriquement conductrice peut être comprise entre 8 et 40% en poids dans la composition polymère réticulable, pour du noir de carbone ; et peut être de 0,1 à 5% en poids dans la composition polymère réticulable, pour des nanotubes de carbones.

Selon une seconde variante, la charge électriquement conductrice pourra être préférée pour obtenir une couche réticulée dite « électriquement isolante », et pourra être utilisée en faible quantité pour améliorer les propriétés diélectriques d'une couche électriquement isolante, sans qu'elle ne devienne semi-conductrice.

La composition polymère réticulable peut comprendre au moins 1% en poids de charge(s), de préférence au moins 10% en poids de charge(s), et de préférence au plus 50% en poids de charge(s), par rapport au poids total de la composition polymère réticulable.

Selon une autre caractéristique de l'invention, et afin de garantir un dispositif électrique dit « Halogen-Free » ou dit plus particulièrement HFFR pour l'anglicisme « *Halogen-Free Flame Retardant* », le dispositif électrique, ou en d'autres termes les éléments qui composent ledit dispositif électrique, ne comprend/comprennent de préférence pas de composés halogénés. Ces composés halogénés peuvent être de toutes natures, tels que par exemple des polymères fluorés ou des polymères chlorés comme le polychlorure de vinyle (PVC), des plastifiants halogénés, des charges minérales halogénées, ..etc.

Les additifs

La composition polymère réticulable de l'invention peut typiquement comprendre en outre des additifs en une quantité de 0,01 à 20 % en poids dans la composition polymère réticulable.

Les additifs sont bien connus de l'homme du métier et peuvent être par exemple choisis parmi :

- des agents de protection, tels que des antioxydants, des anti-UV, des anti-cuivre, des agents anti-arborescences d'eau,
- des agents de mise en œuvre, tels que des plastifiants, des lubrifiants, des huiles,
- des agents compatibilisants,
- des agents de couplage,
- des retardateurs de grillage,
- des pigments,
- des catalyseurs de réticulation,
- et un de leurs mélanges.

Plus particulièrement, les antioxydants permettent de protéger la composition des contraintes thermiques engendrées lors des étapes de fabrication du dispositif ou de fonctionnement du dispositif.

Les antioxydants sont choisis de préférence parmi :

- les antioxydants phénoliques à encombrement stérique tels que le tetrakisméthylene(3,5-di-t-butyl-4-hydroxy-hydrocinnamate) méthane, le octadecyl 3-(3,5-di-t-butyl-4-hydroxyphényle)propionate, le 2,2'-thiodiéthylène bis[3-(3,5-di-t-butyl-4-hydroxyphényle) propionate], le 2,2'-Thiobis(6-t-butyle-4-méthylephénol), le 2,2'-méthylene-bis(6-t-butyle-4-méthylphénol), le 1,2-Bis(3,5-di-t-butyle-4-hydroxyhydrocinnamoyl) hydrazine, et le 2,2'-oxamido-bis(éthyl 3(3,5-di-t-butyle-4-hydroxyphényle) propionate) ;
- les thioéthers tels que le 4,6-bis(octylthiométhyle)-o-crésol, le Bis[2-méthyle-4-{3-n-alkyle (C12 ou C14)thiopropionyloxy}-5-t-butylphényle]sulfide et le Thiobis-[2-t-butyl-5-méthyle-4,1-phénylène] bis [3-(dodecyltio)propionate] ;
- les antioxydants à base de soufre tels que le Dioctadecyl-3,3'-thiodipropionate ou le Didodecyl-3,3'-thiodipropionate ;
- les antioxydants à base de phosphore tels que les phosphites ou phosphonates comme par exemple le Tris(2,4-di-t-butyl-phényle)phosphite ou le Bis(2,4-di-t-butylphényle) pentaerythritol diphosphite ; et
- les antioxydants de type amine tels que les phénylène diamines (IPPD, 6PPD....), les diphénylamine styrène, les diphénylamines, les mercapto benzimidazoles et le 2,2,4-trimethyl-1,2 dihydroquinoline polymérisé (TMQ), ce dernier type d'antioxydant étant particulièrement préféré dans la composition de l'invention.

Les TMQ peuvent avoir différents grades, à savoir :

- un grade dit « standard » avec un faible degré de polymérisation, c'est-à-dire avec un taux de monomère résiduel supérieur à 1% en poids et ayant une teneur en NaCl résiduelle pouvant aller de 100 ppm à plus de 800 ppm (parties par million massiques) ;
- un grade dit « à haut degré de polymérisation » avec un haut degré de polymérisation, c'est-à-dire avec un taux de monomère résiduel inférieur à 1% en poids et ayant une teneur en NaCl résiduelle pouvant aller de 100 ppm à plus de 800 ppm ;
- un grade dit « à faible teneur en sel résiduel » avec une teneur en NaCl résiduelle inférieure à 100 ppm.

Les antioxydants de type TMQ sont de préférence utilisés lorsque la composition polymère comprend des

charges électriquement conductrices.

Le type de stabilisant et son taux dans la composition de l'invention sont classiquement choisis en fonction de la température maximale subie par les polymères pendant la production du mélange et pendant leur mise en œuvre, notamment par extrusion, ainsi que selon la durée maximale d'exposition à cette température.

Les catalyseurs de réticulation ont pour but d'aider à la réticulation. Le catalyseur de réticulation peut être choisi parmi les acides de Lewis ; les acides de Brönsted ; et les catalyseurs à base d'étain comme par exemple le dilaurate de dibutylétain (DBTL).

La couche réticulée et le dispositif électrique

Dans la présente invention, la couche réticulée peut être facilement caractérisée par la détermination de son taux de gel selon la norme ASTM D2765-01.

Plus particulièrement, ladite couche réticulée peut avoir avantageusement un taux de gel, selon la norme ASTM D2765-01 (extraction au xylène), d'au moins 50%, de préférence d'au moins 70%, de préférence d'au moins 80%, et de façon particulièrement préférée d'au moins 90%.

La couche réticulée de l'invention peut être choisie parmi une couche électriquement isolante, une couche semi-conductrice, un élément de bourrage et une gaine de protection. Le dispositif de l'invention peut bien entendu comprendre des combinaisons d'au moins deux de ces quatre types de couche réticulée. La couche réticulée de l'invention peut être la couche la plus à l'extérieur du dispositif électrique.

Dans la présente invention, on entend par « couche électriquement isolante » une couche dont la conductivité électrique peut être d'au plus $1.10^{-9}$ S/m, et de préférence d'au plus $1.10^{-10}$ S/m (siemens par mètre) (à 25 °C).

Lorsque la couche réticulée de l'invention est une couche électriquement isolante, la composition polymère de l'invention peut comprendre au moins 70 % en poids de matériau polymère, formant ainsi la matrice polymère de l'invention.

Dans la présente invention, on entend par « couche semi-conductrice » une couche dont la conductivité électrique peut être d'au moins $1.10^{-9}$ S/m (siemens par mètre), de préférence d'au moins $1.10^{-3}$ S/m, et de préférence peut être inférieure à $1.10^{3}$ S/m (à 25°C).

Lorsque la couche réticulée de l'invention est une couche semi-conductrice, la composition polymère de l'invention peut comprendre une charge électriquement conductrice en une quantité suffisante pour rendre la couche réticulée de l'invention semi-conductrice.

La couche réticulée de l'invention peut être une couche extrudée ou une couche moulée, par des procédés bien connus de l'homme du métier.

Le dispositif électrique de l'invention concerne plus particulièrement le domaine des câbles électriques ou des accessoires pour câble électrique, fonctionnant en courant continu (DC) ou en courant alternatif (AC).

Le dispositif électrique de l'invention peut être un câble électrique ou un accessoire pour câble électrique.

Selon un premier mode de réalisation, le dispositif selon l'invention est un câble électrique comprenant un élément électriquement conducteur allongé entouré par ladite couche réticulée.

Dans ce mode de réalisation, la couche réticulée est de préférence une couche extrudée par des techniques bien connues de l'homme du métier.

La couche réticulée de l'invention peut entourer l'élément électriquement conducteur allongé selon plusieurs variantes.

Selon une première variante, la couche réticulée peut être directement en contact physique avec l'élément électriquement conducteur allongé. On parle dans cette première variante de câble basse tension.

Selon une deuxième variante, la couche réticulée peut être au moins l'une des couches d'un système isolant comprenant :

- une première couche semi-conductrice entourant l'élément électriquement conducteur,
- une couche électriquement isolante entourant la première couche semi-conductrice, et
- une deuxième couche semi-conductrice entourant la couche électriquement isolante.

Plus particulièrement, l'élément électriquement conducteur allongé peut être entouré par une première couche semi-conductrice, une couche électriquement isolante entourant la première couche semi-conductrice, et une deuxième couche semi-conductrice entourant la couche électriquement isolante, la couche réticulée étant au moins l'une de ces trois couches, et de préférence la couche réticulée étant la couche électriquement isolante.

On parle dans cette deuxième variante de câble moyenne ou haute tension.

Selon un deuxième mode de réalisation, le dispositif selon l'invention est un accessoire pour câble électrique, ledit accessoire comprenant ladite couche réticulée.

Ledit accessoire est destiné à entourer, ou entoure lorsqu'il est positionné autour du câble, l'élément électriquement conducteur allongé d'un câble électrique. Plus particulièrement, ledit accessoire est destiné à entourer ou entoure un câble électrique, et de préférence il est destiné à entourer ou entoure au moins une partie ou extrémité d'un câble électrique. L'accessoire peut être notamment une jonction ou une terminaison pour câble électrique.

L'accessoire peut être typiquement un corps longitudinal creux, tel que par exemple une jonction ou une terminaison pour câble électrique, dans lequel au moins une partie d'un câble électrique est destinée à être positionnée.

L'accessoire comporte au moins un élément semi-conducteur et au moins un élément électriquement isolant, ces éléments étant destinés à entourer au moins une partie ou extrémité d'un câble électrique. L'élément semi-conducteur est bien connu pour contrôler la géométrie du champ électrique, lorsque le câble électrique, associé audit accessoire, est sous tension.

La couche réticulée de l'invention peut être ledit élément semi-conducteur et/ou ledit élément électriquement isolant de l'accessoire.

Lorsque l'accessoire est une jonction, cette dernière permet de connecter ensemble deux câbles électriques, la jonction étant destinée à entourer ou entourant au moins en partie ces deux câbles électriques. Plus particulièrement, l'extrémité de chaque câble électrique destiné à être connecté est positionnée à l'intérieur de ladite jonction.

Lorsque le dispositif de l'invention est une terminaison pour câble électrique, la terminaison étant destinée à entourer ou entourant au moins en partie un câble électrique. Plus particulièrement, l'extrémité du câble électrique destiné à être connecté est positionnée à l'intérieur de ladite terminaison.

Lorsque le dispositif électrique est un accessoire pour câble électrique, la couche réticulée est de préférence une couche moulée par des techniques bien connues de l'homme du métier.

Dans la présente invention, l'élément électriquement conducteur allongé du câble électrique peut être un fil métallique ou une pluralité de fils métalliques, torsadé(s) ou non, notamment en cuivre et/ou en aluminium, ou un de leurs alliages.

Un autre objet de l'invention concerne un procédé de fabrication d'un câble électrique selon l'invention, caractérisé en ce qu'il comprend les étapes suivantes :

i. extruder la composition polymère réticulable autour d'un élément électriquement conducteur allongé, pour obtenir une couche extrudée, et

ii. réticuler la couche extrudée de l'étape i.

L'étape i peut être réalisée par des techniques bien connues de l'homme du métier, à l'aide d'une extrudeuse.

Lors de l'étape i, la composition en sortie d'extrudeuse est dite « non réticulée », la température ainsi que le temps de mise en œuvre au sein de l'extrudeuse étant optimisés en conséquent.

On entend par « non réticulée » une couche dont le taux de gel selon la norme ASTM D2765-01 (extraction au xylène) est d'au plus 20%, de préférence d'au plus 10%, de préférence d'au plus 5%, et de façon particulièrement préférée de 0%.

En sortie d'extrudeuse, on obtient donc une couche extrudée autour dudit élément électriquement conducteur, pouvant être ou non, directement en contact physique avec ledit élément électriquement conducteur.

Préalablement à l'étape i, les composés constitutifs de la composition polymère de l'invention peuvent être mélangés, notamment avec le matériau polymère à l'état fondu, afin d'obtenir un mélange homogène. La température au sein du mélangeur peut être suffisante pour obtenir un matériau polymère à l'état fondu, mais est limitée pour éviter la décomposition de l'agent de réticulation lorsqu'il existe, et donc la réticulation du matériau polymère. Puis, le mélange homogène peut être granulé, par des techniques bien connues de l'homme du métier. Ces granulés peuvent ensuite alimenter une extrudeuse pour réaliser l'étape i.

L'étape ii peut être réalisée par voie thermique, par exemple à l'aide d'une ligne continue de vulcanisation (« CV line »), d'un tube vapeur, d'un bain de sel fondu, d'un four ou d'une chambre thermique, ces techniques étant bien connues de l'homme du métier.

L'étape ii permet ainsi d'obtenir une couche réticulée, ayant notamment un taux de gel, selon la norme ASTM D2765-01, d'au moins 40%, de préférence d'au moins 50%, de préférence d'au moins 60%, et de façon particulièrement préférée d'au moins 70%.

Un autre objet de l'invention concerne un procédé de fabrication d'un accessoire pour câble électrique, caractérisé en ce qu'il comprend les étapes suivantes :

i. mouler la composition polymère réticulable, pour obtenir une couche moulée, et

ii. réticuler la couche moulée de l'étape i.

L'étape i peut être réalisée par des techniques bien connues de l'homme du métier, notamment par moulage ou extrusion-moulage.

Préalablement à l'étape i, les composés constitutifs de la composition polymère de l'invention peuvent être

mélangés, comme décrit ci-avant pour la fabrication d'un câble.

L'étape ii peut être réalisée par voie thermique, par exemple à l'aide d'un moule chauffant, qui peut être le moule utilisé dans l'étape i. Dans le moule, la composition de l'étape i peut ensuite être soumise à une température suffisante et pendant un temps suffisant, pour pouvoir obtenir la réticulation souhaitée. On obtient alors une couche moulée et réticulée.

L'étape ii permet ainsi d'obtenir une couche réticulée, ayant notamment un taux de gel, selon la norme ASTM D2765-01, d'au moins 40%, de préférence d'au moins 50%, de préférence d'au moins 60%, et de façon particulièrement préférée d'au moins 70%.

Dans la présente invention, la température de réticulation et le temps de réticulation de la couche extrudée et/ou moulée mis en œuvre sont notamment fonctions de l'épaisseur de la couche, du nombre de couches, de la présence ou non d'un catalyseur de réticulation, du type de réticulation, ..etc.

L'homme du métier pourra facilement déterminer ces paramètres en suivant l'évolution de la réticulation grâce à la détermination du taux de gel selon la norme ASTM D2765-01 pour obtenir une couche réticulée.

Lorsqu'une extrudeuse est utilisée, le profil de température de l'extrudeuse et la vitesse d'extrusion sont des paramètres sur lesquels l'homme du métier pourra également jouer pour garantir l'obtention des propriétés souhaitées.

D'autres caractéristiques et avantages de la présente invention apparaîtront à la lumière de la description d'exemples non limitatifs d'un câble électrique selon l'invention et d'accessoire pour câble électrique selon l'invention, faits en référence aux figures.

La figure 1 représente une vue schématique d'un câble électrique selon un mode de réalisation préféré conforme à l'invention.

La figure 2 représente une vue schématique d'un dispositif électrique selon l'invention, comprenant une jonction en coupe longitudinale, cette jonction entourant l'extrémité de deux câbles électriques.

La figure 3 représente une vue schématique d'un dispositif électrique selon une première variante de l'invention, comprenant une terminaison en coupe longitudinale, cette terminaison entourant l'extrémité d'un unique câble électrique.

La figure 4 représente des histogrammes concernant la densité de réticulation pour des couches réticulées selon l'invention et selon des compositions comparatives.

La figure 5 représente la conductivité à 90°C en fonction de la fréquence (Hz), pour des couches réticulées selon l'invention et selon des compositions comparatives.

La figure 6 représente la tangente delta (tan(5)) à 90°C en fonction de la fréquence (Hz), pour des couches réticulées selon l'invention et selon des compositions comparatives.

Pour des raisons de clarté, seuls les éléments essentiels pour la compréhension de l'invention ont été représentés de manière schématique, et ceci sans respect de l'échelle.

Le câble d'énergie 1 à moyenne ou haute tension, illustré dans la figure 1, comprend un élément conducteur 2 central allongé, notamment en cuivre ou en aluminium. Le câble d'énergie 1 comprend en outre plusieurs couches disposées successivement et coaxialement autour de cet élément conducteur 2, à savoir : une première couche 3 semi-conductrice dite « couche semi-conductrice interne », une couche 4 électriquement isolante, une deuxième couche 5 semi-conductrice dite « couche semi-conductrice externe », un écran métallique 6 de mise à la terre et/ou de protection, et une gaine extérieure de protection 7.

La couche 4 électriquement isolante est une couche extrudée et réticulée, obtenue à partir de la composition polymère réticulable selon l'invention.

Les couches semi-conductrices sont également des couches extrudées et réticulées, pouvant être obtenues à partir de la composition polymère réticulable selon l'invention.

La présence de l'écran métallique 6 et de la gaine extérieure de protection 7 est préférentielle, mais non essentielle, cette structure de câble étant en tant que telle bien connue de l'homme du métier.

La figure 2 représente un dispositif 101 comprenant une jonction 20 entourant en partie deux câbles électriques 10a et 10b.

Plus particulièrement, les câbles électriques 10a et 10b comprennent respectivement une extrémité 10'a et 10'b, destinées à être entourées par la jonction 20.

Le corps de la jonction 20 comporte un premier élément semi-conducteur 21 et un second élément semi-conducteur 22, séparés par un élément électriquement isolant 23, lesdits éléments semi-conducteur 21, 22 et ledit élément électriquement isolant 23 entourent les extrémités 10'a et 10'b respectivement des câbles électriques 10a et 10b.

Cette jonction 20 permet de connecter électriquement le premier câble 10a au second câble 10b, notamment grâce à un connecteur électrique 24 disposé au centre de la jonction 20.

Au moins un des éléments choisis parmi le premier élément semi-conducteur 21, le second élément semi-conducteur 22 et ledit élément électriquement isolant 23, peut être une couche réticulée telle que décrite dans l'invention.

Le premier câble électrique 10a comprend un conducteur électrique 2a entouré par une première couche semi-conductrice 3a, une couche électriquement isolante 4a entourant la première couche semi-conductrice 3a, et une seconde couche semi-conductrice 5a entourant la couche électriquement isolante 4a.

Le second câble électrique 10b comprend un conducteur électrique 2b entouré par au moins une première couche semi-conductrice 3b, une couche électriquement isolante 4b entourant la première couche semi-conductrice 3b, et une seconde couche semi-conductrice 5b entourant la couche électriquement isolante 4b.

Ces câbles électriques 10a et 10b peuvent être ceux décrits dans la présente invention.

A ladite extrémité 10'a, 10'b de chaque câble électrique 10a, 10b, la seconde couche semi-conductrice 5a, 5b est au moins partiellement dénudée afin que la couche électriquement isolante 4a, 4b soit au moins partiellement positionnée à l'intérieur de la jonction 20, sans être recouverte de la seconde couche semi-conductrice 5a, 5b du câble.

A l'intérieur de la jonction 20, les couches électriquement isolantes 4a, 4b sont directement en contact physique avec l'élément électriquement isolant 23 et le premier élément semi-conducteur 21 de la jonction 20. Les deuxièmes couches semi-conductrices 5a, 5b sont directement en contact physique avec le second élément semi-conducteur 22 de la jonction 20.

La figure 3 représente un dispositif 102 comprenant une terminaison 30 entourant un unique câble électrique 10c.

Plus particulièrement, le câble électrique 10c comprend une extrémité 10'c, destinée à être entourée par la terminaison 30.

Le corps de la terminaison 30 comporte un élément semi-conducteur 31 et un élément électriquement isolant 32, ledit élément semi-conducteur 31 et ledit élément électriquement isolant 32 entourent l'extrémité 10'c du câble électrique 10c.

Au moins un des éléments choisi parmi l'élément semi-conducteur 31 et l'élément électriquement isolant 32 peut être une couche réticulée telle que décrite dans l'invention.

Le câble électrique 10c comprend un conducteur électrique 2c entouré par une première couche semi-conductrice 3c, une couche électriquement isolante 4c entourant la première couche semi-conductrice 3c, et une seconde couche semi-conductrice 5c entourant la couche électriquement isolante 4c.

Ce câble électrique 10c peut être celui décrit dans la présente invention.

A ladite extrémité 10'c du câble électrique 10c, la seconde couche semi-conductrice 5c est au moins partiellement dénudée afin que la couche électriquement isolante 4c soit au moins partiellement positionnée à l'intérieur de la terminaison 30, sans être recouverte de la seconde couche semi-conductrice 5c du câble.

A l'intérieur de la terminaison 30, la couche électriquement isolante 4c, est directement en contact physique avec l'élément électriquement isolant 32 de la terminaison 30. La deuxième couche semi-conductrice 5c est directement en contact physique avec l'élément semi-conducteur 31 de la jonction 30.

## Exemples

### 1. Compositions polymères réticulables électriquement isolantes

Le tableau 1 ci-dessous rassemble des compositions polymères réticulables dont les quantités des composés sont exprimées en pourcentages en poids par rapport au poids total de la composition polymère.

Le matériau polymère dans le tableau 1 est composé uniquement d'EPDM.

Les compositions C1 à C3 sont des essais comparatifs, et les compositions I1 à I3 sont conformes à l'invention.

**Tableau 1**

| Compositions polymères réticulables | C1 | C2 | C3 | I1 | I2 | I3 |
|---|---|---|---|---|---|---|
| Matériau polymère | 99,5 | 99,0 | 88,0 | 99,0 | 98,5 | 88,0 |
| Particules I | 0 | 0 | 0 | 0,5 | 0,5 | 10,0 |
| Particules C | 0 | 0 | 10,0 | 0 | 0 | 0 |
| Agent de réticulation | 0,5 | 1,0 | 2,0 | 0,5 | 1,0 | 2,0 |

L'origine des composés du tableau 1 est la suivante :

- Matériau polymère est de l'EPDM commercialisé par la société ExxonMobil sous la référence Vistalon 1703P ;
- Particules I sont des particules du type POSS, commercialisées par la société Hybrid Plastics sous la référence OL1170 (OctaVinyl POSS), dont la température de fusion est de 177°C ;
- Particules C sont des particules du type POSS, commercialisées par la société Hybrid Plastics sous la référence

OL1118 (AllylIsobutyl POSS), dont la température de fusion est de 246°C ;

- Agent de réticulation est un peroxyde organique du type Dicumyl peroxide (DCP), commercialisé par la société Arkema sous la référence Luperox DCP, dont le temps de demi-vie est de 1 minute à 175°C.

2. Préparation des couches réticulées

Les compositions rassemblées dans le tableau 1 sont mises en œuvre comme suit.

Le polymère est introduit sur un mélangeur à cylindres à une température de 120°C. Les particules ainsi que l'agent de réticulation sont ajoutés sur cylindre à la même température, les conditions de mélange (température et durée) étant telles que l'agent de réticulation ne se décompose pas pendant cette étape de mélange. Des préformes sont ainsi obtenues.

La réticulation peroxyde est ensuite effectuée lors de la fabrication des plaques moulées à partir des préformes. Pour cela, les préformes sont moulées sous une pression de 200 bars à 180°C pendant environ 8 minutes, la température de moulage permettant alors à l'agent de réticulation de se décomposer. Les plaques obtenues sont donc réticulées et ont une épaisseur d'environ 1 mm.

3. Caractérisation des couches réticulées

La densité de réticulation (v), la conductivité à 90°C et la tangente delta (tan5) à 90°C ont été mesurées à partir des plaques formées ci-avant, selon les méthodes suivantes.

3.1. La densité de réticulation (v)

La mesure de la densité de réticulation a été réalisée par DMA (Analyse Mécanique Dynamique), à l'aide d'éprouvettes d'environ 1 mm d'épaisseur sollicitées en traction de 30 à 150°C avec une rampe de montée en température de $3°C.min^{-1}$.

La fréquence de sollicitation a été fixée à 1Hz et la déformation à 0.1%.

La densité de réticulation est obtenue via la mesure du module de stockage à 120°C selon la formule bien établie de l'élasticité caoutchoutique :

$$\nu = \frac{\rho}{Mc}$$

*and*

$$Mc = \frac{3\rho RT}{E'_r}$$

avec R étant la constante des gaz parfaits, T la température à laquelle le module E' est pris, E' la valeur du module caoutchoutique (ici à 120°C) et p la densité du polymère à cette température.

3.2. La conductivité et la tangente delta (tan5), à 90°C

La mesure de la conductivité et de la tangente delta (ou facteur de perte) a été réalisée par spectroscopie diélectrique.

Les essais ont été effectués sur des échantillons d'épaisseur proche de 1 mm, sur une gamme de fréquences de $10^{-1}$ à $10^{6}$ Hz avec une tension de 1V. La température de 90°C a été appliquée durant l'essai.

4. Résultats

Les résultats obtenus sont rassemblés dans les figures 4, 5 et 6.

La figure 4 représente des histogrammes concernant la densité de réticulation pour des couches réticulées selon l'invention et selon des compositions comparatives.

La composition I1 montre clairement une densité de réticulation sensiblement identique à celle de la composition C2, sachant que la composition I1, avec des particules selon l'invention, comprend deux fois moins de peroxyde organique que la composition C2.

En outre, on remarque également que la composition I2 présente une densité de réticulation nettement supérieure à celle de la composition C2, sachant que la composition I2, avec des particules selon l'invention, comprend une quantité identique de peroxyde organique que la composition C2.

Par conséquent, les compositions polymères réticulables selon l'invention présentent de meilleurs niveaux de réticulation et donc une meilleure résistance mécanique.

Les compositions polymères réticulables selon l'invention permettent en outre de diminuer avantageusement les quantités de peroxyde organique utilisées à propriétés thermo-mécaniques équivalentes : les risques de claquage électrique dus aux sous-produits de réticulation (formés lors de la décomposition de ces mêmes peroxydes) sont de facto limités de façon significatives, voire évités.

Les figures 5 et 6 représentent respectivement la conductivité à 90°C en fonction de la fréquence (Hz), et la tangente delta (tan(5)) (ou tangente de l'angle de perte) à 90°C en fonction de la fréquence (Hz), pour des couches réticulées selon l'invention et selon des compositions comparatives.

On remarque clairement que les compositions I2 et I3 selon l'invention présentent une perte beaucoup moins importante à 0,1 Hz que la composition comparative C3.

En effet, les résultats à 0,1 Hz sont rassemblés dans le tableau 2 suivant :

**Tableau 2**

| Compositions réticulables | I2 | I3 | C3 |
|---|---|---|---|
| Conductivité à 90°C | $2{,}51.10^{-16}$ | $2{,}70.10^{-16}$ | $4{,}77.10^{-15}$ |
| Tangente delta à 90°C | $1{,}98.10^{-3}$ | $2{,}10.10^{-3}$ | $3{,}77.10^{-2}$ |

Par conséquent, les compositions polymères réticulables selon l'invention présentent de meilleures propriétés diélectriques (i.e. meilleure isolation électrique).

## Revendications

1. Dispositif électrique (1, 20, 30) comprenant une couche réticulée (3, 4, 5) obtenue à partir d'une composition polymère réticulable comprenant un matériau polymère et des particules à structure polyédrique, **caractérisé en ce que** les particules ont un point de fusion d'au plus 200°C, et le matériau polymère comprend un ou plusieurs polymère(s) d'oléfine.

2. Dispositif selon la revendication 1, **caractérisé en ce que** les particules comprennent des groupements Si-O.

3. Dispositif selon la revendication 1 ou 2, **caractérisé en ce que** les particules sont des POSS (Polyhedral oligomeric silsesquioxane).

4. Dispositif selon l'une quelconque des revendications précédentes, **caractérisé en ce que** les particules comprennent au moins une fonction vinyle ($CH=CH_2$).

5. Dispositif selon l'une quelconque des revendications précédentes, **caractérisé en ce que** les particules sont des nanoparticules.

6. Dispositif selon l'une quelconque des revendications précédentes, **caractérisé en ce que** la composition polymère réticulable comprend au plus 20,0 % en poids de particules à structure polyhédrique, et de préférence au plus 10,0 % en poids de particules à structure polyhédrique, par rapport au poids total de la composition polymère réticulable.

7. Dispositif selon l'une quelconque des revendications précédentes, **caractérisé en ce que** la composition polymère réticulable comprend un agent de réticulation.

8. Dispositif selon la revendication 7, **caractérisé en ce que** l'agent de réticulation est un peroxyde organique.

9. Dispositif selon la revendication 8, **caractérisé en ce que** la composition polymère réticulable comprend moins de 1,0% en poids de peroxyde organique, par rapport au poids total de la composition polymère réticulable.

10. Dispositif selon l'une quelconque des revendications précédentes, **caractérisé en ce que** le polymère d'oléfine est

un terpolymère d'éthylène-propylène-diène-monomère (EPDM).

**11.** Dispositif selon l'une quelconque des revendications précédentes, **caractérisé en ce qu'**il est un câble électrique (1) comprenant un élément électriquement conducteur allongé entouré par ladite couche réticulée.

**12.** Dispositif selon la revendication 11, **caractérisé en ce que** l'élément conducteur allongé (2) est entouré par une première couche semi-conductrice (3), une couche électriquement isolante (4) entourant la première couche semi-conductrice, et une deuxième couche semi-conductrice (5) entourant la couche électriquement isolante, la couche réticulée étant au moins l'une de ces trois couches, et de préférence la couche réticulée étant la couche électriquement isolante (4).

**13.** Dispositif selon l'une quelconque des revendications 1 à 10, **caractérisé en ce qu'**il est un accessoire (20,30) pour câble électrique, ledit accessoire comprenant la couche réticulée.

**14.** Dispositif selon la revendication 13, **caractérisé en ce que** l'accessoire est une jonction ou une terminaison pour câble électrique.

**Patentansprüche**

**1.** Elektrische Vorrichtung (1, 20, 30), umfassend eine Netzschicht (3, 4, 5), die aus einer vernetzbaren Polymerzusammensetzung, umfassend ein Polymermaterial und Partikel mit polyedrischer Struktur, hergestellt ist, **dadurch gekennzeichnet, dass** die Partikel einen Schmelzpunkt von höchstens 200 °C aufweisen und das Polymermaterial mindestens ein Olefinpolymer umfasst.

**2.** Vorrichtung nach Anspruch 1, **dadurch gekennzeichnet, dass** die Partikel Si-O-Gruppen umfassen.

**3.** Vorrichtung nach Anspruch 1 oder 2, **dadurch gekennzeichnet, dass** es sich bei den Partikeln um POSS (Polyhedral Oligomeric SilSesquioxane) handelt.

**4.** Vorrichtung nach einem der vorstehenden Ansprüche,
**dadurch gekennzeichnet, dass** die Partikel mindestens eine Vinylfunktion ($CH=CH_2$) umfassen.

**5.** Vorrichtung nach einem der vorstehenden Ansprüche,
**dadurch gekennzeichnet, dass** es sich bei den Partikeln um Nanopartikel handelt.

**6.** Vorrichtung nach einem der vorstehenden Ansprüche,
**dadurch gekennzeichnet, dass** die vernetzbare Polymerzusammensetzung, bezogen auf das Gesamtgewicht der vernetzbaren Polymerzusammensetzung, zu höchstens 20,0 Gew.-% Partikel mit polyedrischer Struktur, vorzugsweise zu höchstens 10,0 Gew.-% Partikel mit polyedrischer Struktur umfasst.

**7.** Vorrichtung nach einem der vorstehenden Ansprüche,
**dadurch gekennzeichnet, dass** die vernetzbare Polymerzusammensetzung ein Vernetzungsmittel umfasst.

**8.** Vorrichtung nach Anspruch 7, **dadurch gekennzeichnet, dass** es sich beim Vernetzungsmittel um ein organisches Peroxid handelt.

**9.** Vorrichtung nach Anspruch 8, **dadurch gekennzeichnet, dass** die vernetzbare Polymerzusammensetzung, bezogen auf das Gesamtgewicht der vernetzbaren Polymerzusammensetzung, zu weniger als 1,0 Gew.-% organisches Peroxid umfasst.

**10.** Vorrichtung nach einem der vorstehenden Ansprüche,
**dadurch gekennzeichnet, dass** es sich beim Olefinpolymer um ein Ethylen-Propylen-Dien-Monomer-Terpolymer (EPDM) handelt.

**11.** Vorrichtung nach einem der vorstehenden Ansprüche,
**dadurch gekennzeichnet, dass** es sich dabei um ein Stromkabel (1) handelt, das ein von der Netzschicht umschlossenes, längliches, elektrisch leitendes Element umfasst.

12. Vorrichtung nach Anspruch 11, **dadurch gekennzeichnet, dass** das längliche leitende Element (2) von einer ersten Halbleiterschicht (3), einer die erste Halbleiterschicht umschließenden elektrisch isolierenden Schicht (4) und einer die isolierende Schicht umschließenden zweiten Halbleiterschicht (5) umschlossen ist, wobei es sich bei der Netzschicht um mindestens eine dieser drei Schichten handelt, vorzugsweise wobei die Netzschicht die elektrisch isolierende Schicht (4) ist.

13. Vorrichtung nach einem der Ansprüche 1 - 10, **dadurch gekennzeichnet, dass** es sich dabei um Zubehör (20, 30) für ein Stromkabel handelt, wobei das Zubehör die Netzschicht umfasst.

14. Vorrichtung nach Anspruch 13, **dadurch gekennzeichnet, dass** es sich beim Zubehörteil um einen Anschluss oder einen Abschluss eines Stromkabels handelt.

## Claims

1. An electrical device (1, 20, 30) comprising a crosslinked layer (3, 4, 5) obtained from a crosslinkable polymer composition comprising a polymer material and particles having polyhedral structure, **characterized in that** the particles have a melting point of no more than 200 °C, and the polymer material comprises one or more olefin polymers.

2. The device according to claim 1, **characterized in that** the particles comprise Si-O groups.

3. The device according to claim 1 or 2, **characterized in that** the particles are POSS particles (Polyhedral oligomeric silsesquioxane).

4. The device according to any of the preceding claims, **characterized in that** the particles comprise at least one vinyl function ($CH=CH_2$).

5. The device according to any of the preceding claims, **characterized in that** the particles are nanoparticles.

6. The device according to any of the preceding claims, **characterized in that** the crosslinkable polymer composition comprises no more than 20.0 weight % of particles of polyhedral structure, preferably no more than 10.0 weight % of particles of polyhedral structure relative to the total weight of the crosslinkable polymer composition.

7. The device according to any of the preceding claims, **characterized in that** the crosslinkable polymer composition comprises a crosslinking agent.

8. The device according to claim 7, **characterized in that** the crosslinking agent is an organic peroxide.

9. The device according to claim 8, **characterized in that** the crosslinkable polymer composition comprises less than 1.0 weight % of organic peroxide, relative to the total weight of the crosslinkable polymer composition.

10. The device according to any of the preceding claims, **characterized in that** the olefin polymer is a terpolymer of ethylene-propylene-diene-monomer (EPDM).

11. The device according to any of the preceding claims, **characterized in that** it is an electrical cable (1) comprising an elongate electrically conductive element surrounded by said crosslinked layer.

12. The device according to claim 11, **characterized in that** the elongate conductive element (2) is surrounded by a first semiconductive layer (3), an electrically insulating layer (4) surrounding the first semiconductive layer, and a second semiconductive layer (5) surrounding the electrically insulating layer, the crosslinked layer being at least one of these three layers, and preferably the crosslinked layer being the electrically insulating layer (4).

13. The device according to any of claims 1 to 10, **characterized in that** the it is an accessory (20, 30) for electrical cable, said accessory comprising the crosslinked layer.

14. The device according to claim 13, **characterized in that** the accessory is a joint or termination for electric cable.

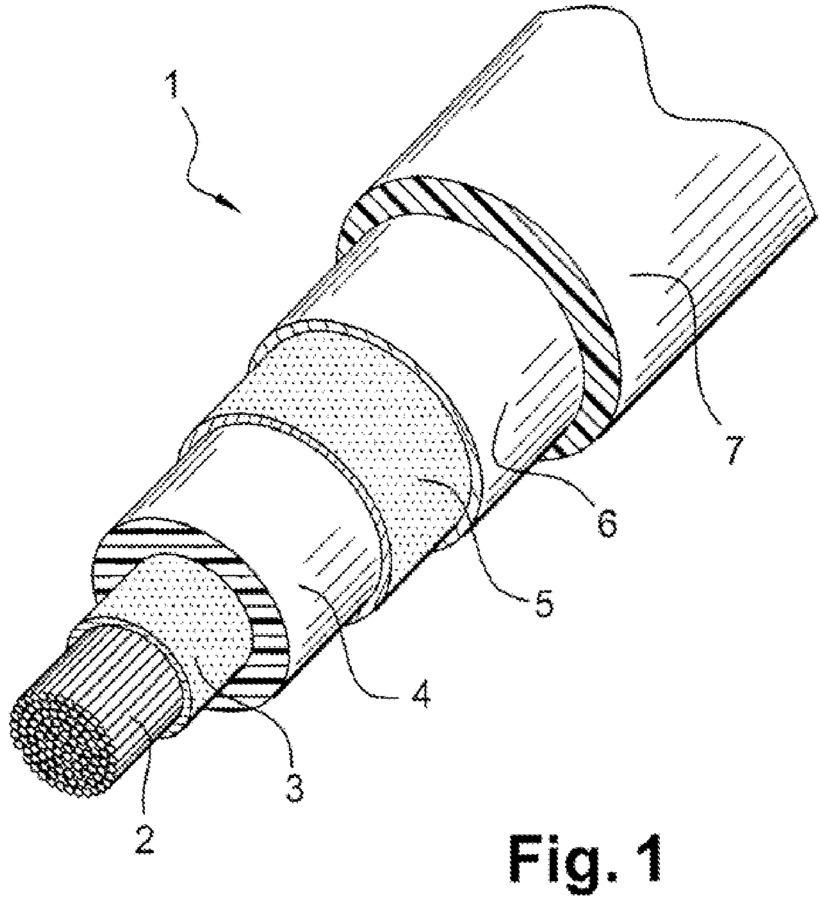


Fig. 1

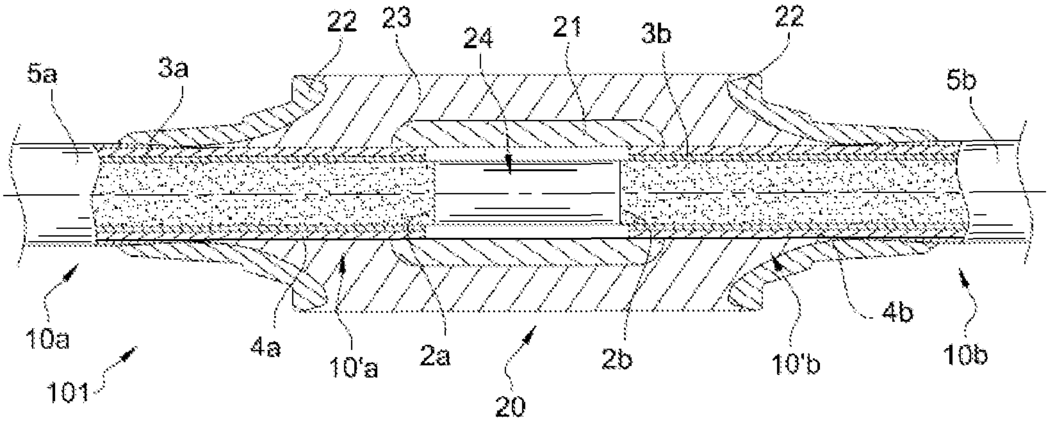
22
23
24
21
3b
22
5a
3a
5b
10a
101
4a
10'a
2a
20
2b
10'b
4b
10b

Fig. 2

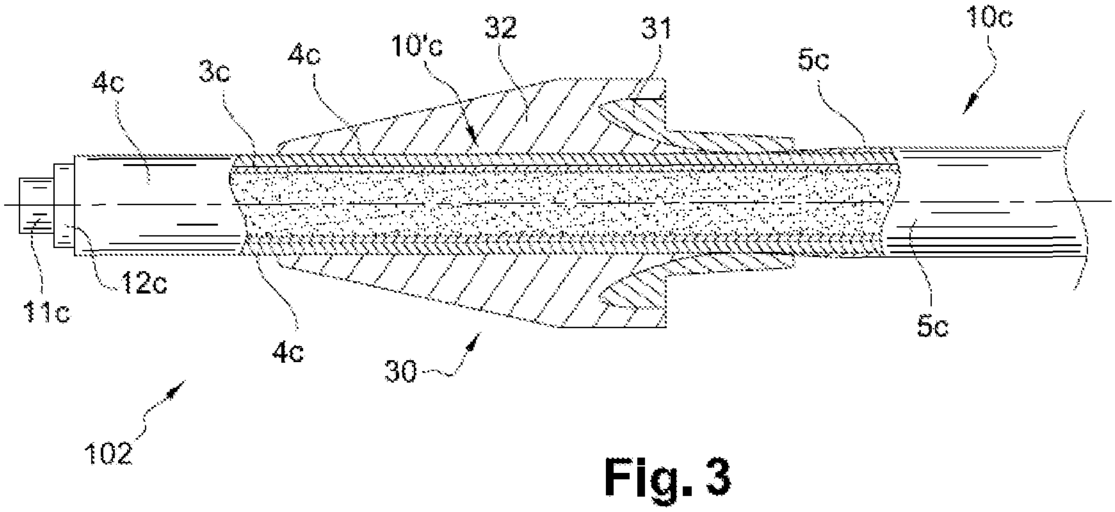
10c
4c
3c
4c
10'c
32
31
5c
11c
12c
4c
30
5c
102

Fig. 3

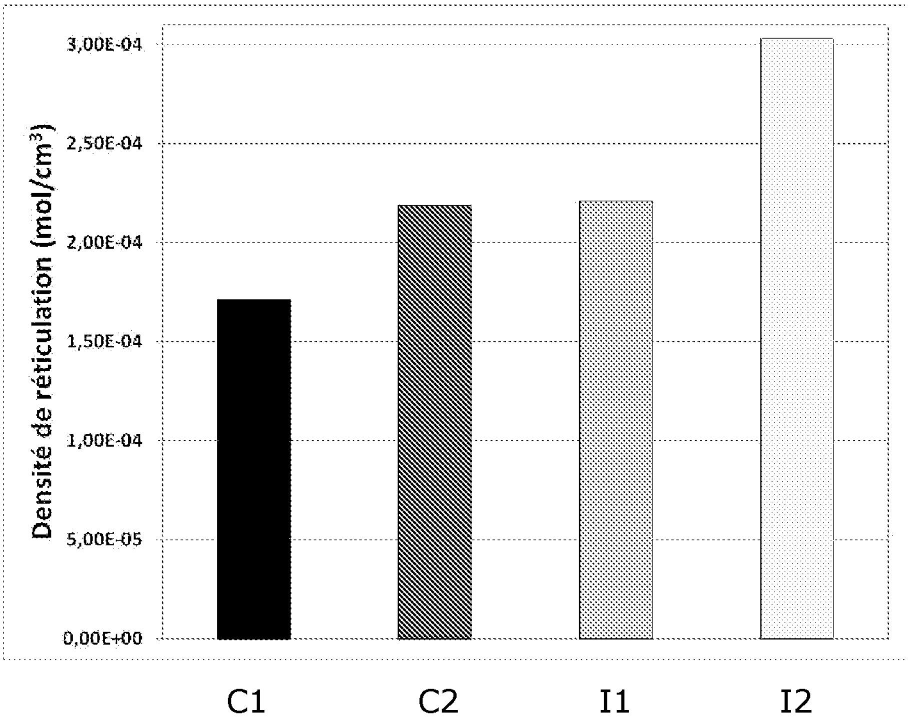
3,00E-04
2,50E-04
2,00E-04
1,50E-04
1,00E-04
5,00E-05
0,00E+00
Densité de réticulation (mol/cm3)
C1
C2
I1
I2

**FIG.4**

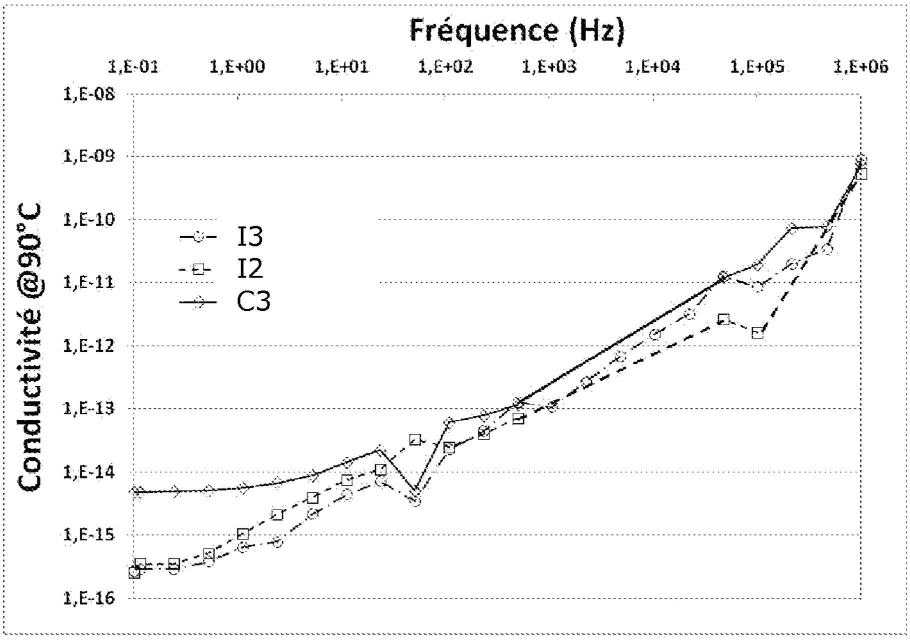
Fréquence (Hz)
1,E-01
1,E+00
1,E+01
1,E+02
1,E+03
1,E+04
1,E+05
1,E+06
1,E-08
1,E-09
1,E-10
1,E-11
1,E-12
1,E-13
1,E-14
1,E-15
1,E-16
Conductivité @90°C
I3
I2
C3

**FIG.5**

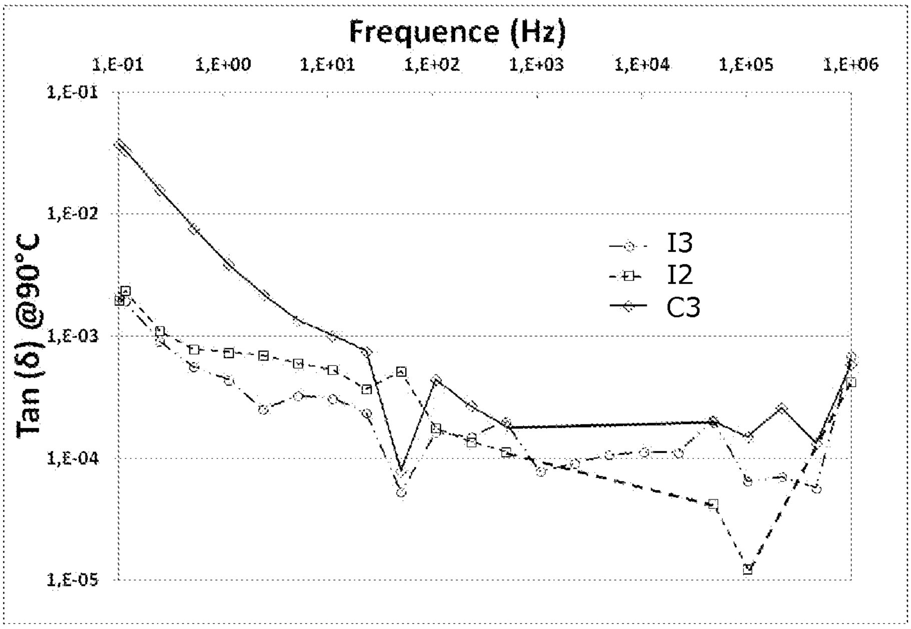
Frequence (Hz)
1,E-01
1,E+00
1,E+01
1,E+02
1,E+03
1,E+04
1,E+05
1,E+06
1,E-01
1,E-02
1,E-03
1,E-04
1,E-05
Tan (δ) @90°C
I3
I2
C3

**FIG.6**